# EUROPEAN PATENT SPECIFICATION

(11) **EP 4 161 812 B1**
(45) Date of publication and mention of the grant of the patent: **09.07.2025**
(21) Application number: 21727618.7
(22) Date of filing: 11.05.2021
(51) Int. Cl.: B60T 13/22, B60T 13/66, B60T 13/68, B60T 17/18

(54) **A REDUNDANT ELECTRO-PNEUMATIC BRAKE CONTROL SYSTEM AND METHOD FOR REDUNDANT BRAKE CONTROL OF A VEHICLE**
REDUNDANTE ELEKTROPNEUMATISCHE BREMSSTEUERUNG UND VERFAHREN ZUR REDUNDANTEN STEUERUNG EINER FAHRZEUGBREMSE
COMMANDE DE FREIN ELECTROPNEUMATIQUE REDONDANTE ET PROCEDE DE COMMANDE REDONDANTE D'UN FREIN DE VÉHICULE

(30) Priority: 04.06.2020 SE 2050645
(43) Date of publication of application: 12.04.2023
(73) Proprietor: Scania CV AB, 151 87 Södertälje (SE)
(72) Inventor: FLODIN, Linus, 168 72 Bromma (SE); ÖSTLUND, Tomas, 141 37 Huddinge (SE); EDINGER, Martin, 141 68 Huddinge (SE); THORSELL, Johan, 117 56 Stockholm (SE)
(74) Representative: Scania CV AB
(86) International application number: PCT/SE2021/050453
(87) International publication number: WO 2021/246930

(56) References cited:
- EP-A1- 3 415 386
- EP-A1- 3 626 557

## Description

### Technical field

The present invention relates to vehicles and in particular to a redundant electro-pneumatic brake control system for a vehicle and to a method for redundant brake control of the vehicle. The invention also relates to a vehicle comprising the redundant electro-pneumatic brake control system, a computer program and a computer-readable medium for implementing the method.

### Background

A redundant braking system is a system that provides braking capability in case of failure of a primary (or main) brake system. A typical redundant brake system utilizes the service brakes in the front axle group and in the rear axle groups, and if applicable in one or more coupled trailers.

The commonly used backup systems of today rely on that a driver manually pushes the brake pedal to open a valve, whereby a pressure that actuates the brakes is provided. However, when a driver is not present for example in autonomous vehicles, or unable to push the brake pedal to brake in case of failures, there is a need for a redundant brake system that is able to brake the vehicle based on control inputs from electronic systems. Examples of prior art redundant pneumatic brake systems can be seen e.g. in documents EP3415386A1 and EP3626557A1.

The redundant brake systems for autonomous vehicles that have been proposed so far are either complex and expensive, or very simple with little means to ensure vehicle stability or to provide enough brake force. In many cases, the redundant system is more or less another electronic brake system added on top of the primary braking system. Hence, there is a need for improved braking systems that can provide reliable braking with reasonable effort.

### Summary

It is an object of the invention to alleviate at least some of the drawbacks with the prior art. Thus, it is an object to provide a cost-efficient and relatively simple redundant brake control system which utilizes many already existing components available in the vehicle. Furthermore, it is an object to provide a redundant brake control system that makes it possible to avoid vehicle instability when braking with it.

According to a first aspect, the invention relates to a redundant pneumatic brake control system for use in a vehicle comprising service brakes actuatable by a Pneumatic Control Module, PCM, and one or more pressure-actuated spring brakes. The service brakes are configured to be electrically actuated by a main braking system during normal operation of the vehicle. The redundant pneumatic brake control system is arranged to be activated upon failure of the main braking system of the vehicle. The redundant pneumatic brake control system comprises an Electropneumatic Parking Brake module, EPB, a first pneumatic connection, a second pneumatic connection, a pressure control valve and a control arrangement. A step response of the second pneumatic connection is shorter than a step response of the first pneumatic connection. The EPB is configured to generate a controllable EPB pressure. The first pneumatic connection is arranged to connect the EPB to the spring brakes, such that the spring brakes are actuatable by the EPB pressure. The second pneumatic connection is arranged to connect the EPB to a control port of the PCM, such that the generated EPB pressure regulates a control pressure present at the control port. Furthermore, the pressure control valve, PCV, is arranged in the second pneumatic connection. The PCV is controllable to an open position and a closed position. A control pressure at the control port of the PCM is maintained when the PCV is in the closed position. Finally, the control arrangement is configured to perform independent control of the pressure-actuated spring brakes and service brakes by alternately controlling the PCV to the open position and the closed position, based on the difference in step response of the first and second pneumatic connections, while controlling a level of the EPB pressure. To use the EPB for redundant braking is a cost-effective solution, as it enables reusing the parking brake functionality, which is an independent function of the main service brake system. By using the EPB for redundant braking, it is possible to electrically brake the vehicle with enough brake force in the event of failure, but without the need for a driver to press a pedal. By at least approximately independently (i.e. partly independently) controlling the spring brakes and the service brakes using the EPB as a single regulator for both brake types, instability and locking of rear brake axles may be avoided, as brake force may be independently applied to different wheel axes of the vehicle.

In some embodiments, the control arrangement is configured to control a level of the EPB pressure based on a service brake pressure demand during time periods that are shorter than a maximum pulse length. Thereby, the spring brakes are insignificantly affected during times when the service brakes are controlled.

In some embodiments, the maximum pulse length is shorter than the step response of the first pneumatic connection. This means that the time periods when the EPB pressure is controlled based on service brake pressure demand are so short that the pressure controlling the spring brakes will not have time to settle at the new EPB pressure level. The reason is that the air volume in the spring brakes prevents the pressure from changing too fast. Thereby, the pressure controlling the spring brakes will most likely not reach the level corresponding to the service brake pressure demand during these time periods.

In some embodiments, the control arrangement is configured to control the PCV to the open position while controlling the level of the EPB pressure based on a service brake demand, whereby the service brakes are controlled based on the service brake demand. In addition, the control arrangement is configured to control the PCV to the closed position while controlling the level of the EPB pressure based on a spring brake demand, whereby spring brakes are controlled based on the spring brake demand and the control pressure at the control port of the PCM is maintained. In some embodiments, the spring brakes are arranged to rear wheels and the service brakes are arranged to brake front wheels of the vehicle. Thereby, it is possible to avoid vehicle instability when braking with the redundant brake system by limiting brake force on spring brakes without affecting brake force on service brakes.

In some embodiments, the second pneumatic connection is arranged to connect the generated EPB pressure to a trailer input port of a trailer, such that brakes of the trailer are controllable by the EPB pressure. Thereby, the trailer brakes may also be controlled using the EPB as a regulator.

In some embodiments, the service brakes are actuated by a pressure increase of the control pressure at the control port of the PCM and the spring brakes are actuated by a pressure decrease. In these embodiments the redundant pneumatic brake control system comprises a pressure inversion device arranged in the second pneumatic connection to invert the EPB pressure and to provide the inverted EPB pressure at the control port of the PCM. In some embodiments, the redundant pneumatic brake control system comprises a Trailer Control Module, TCM, arranged in the second pneumatic connection to control the input pressure at the trailer input port and wherein the pressure inversion device is arranged in the TCM. These embodiments provide a cost-efficient and relatively simple redundant brake system which makes use of many already existing components of the main brake system.

According to a second aspect, the invention relates to a vehicle comprising service brakes actuatable by a Pneumatic Control Module, PCM, pressure-actuated spring brakes and the redundant pneumatic brake control system according to the first aspect, wherein the service brakes are configured to be electrically actuated by a main braking system during normal operation of the vehicle.

According to a third aspect, the invention relates to a method for redundant brake control of a vehicle. The vehicle comprises spring brakes actuatable by an Electropneumatic Parking Brake, EPB, pressure generated by an EPB and service brakes actuatable by the EPB pressure. A pneumatic connection between the EPB and the spring brakes has a longer step response than a pneumatic connection connecting the EPB and the service brakes. The method comprises obtaining a spring brake demand and a service brake demand and performing independent control of the spring brakes and the service brakes using the EPB and based on the difference in step response of pneumatic connections. The independent control is performed by alternately controlling, a Pressure Control Valve, PCV, arranged between the EPB and the one or more service brakes, to an open position while controlling a level of the EPB pressure based on the service brake demand, such that the EPB pressure controls the spring brakes. The method also comprises controlling the PCV to a closed position while controlling a level of an EPB pressure based on the spring brake demand, such that the EPB pressure actuates the spring brakes and a control pressure controlling the service brakes is maintained.

In some embodiments, the method comprises receiving an activation request message indicative of the spring brake demand and the service brake demand.

In some embodiments, the level of the EPB pressure is controlled based on a service brake pressure demand during time periods that are shorter than a maximum pulse length.

In some embodiments, the maximum pulse length is shorter than the step response of the first pneumatic connection.

According to a fourth aspect, the invention relates to a computer program comprising instructions which, when the program is executed by a computer, cause the computer to carry out the method according to the third aspect.

According to a fifth aspect, the invention relates to a computer-readable medium comprising instructions which, when executed by a computer, cause the computer to carry out the method according to the third aspect.

### Brief description of the drawings

Fig. 1 illustrates a vehicle where the proposed technique may be implemented.
Fig. 2 illustrates a manually driven vehicle.
Fig. 3A illustrates a vehicle comprising a redundant electro-pneumatic brake control system.
Fig. 3B illustrates a control arrangement according to the first aspect in more detail.
Fig. 4 illustrates another example implementation of the proposed technique.
Fig. 5 is a flow chart of a method for redundant brake control.

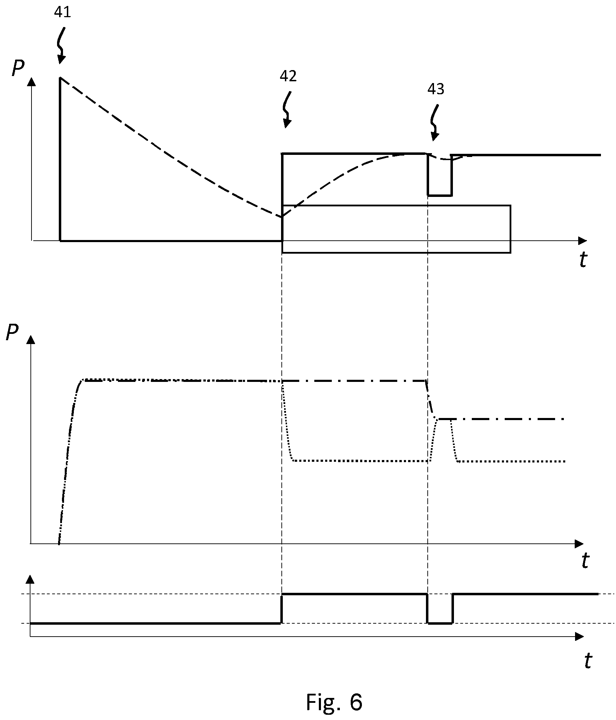

Fig. 6 is a graph illustrating how the pressures in the redundant electro-pneumatic brake control system changes based on input.

### Detailed description

It is desirable that a redundant brake system allows for individual adjustment of brake force between front axle group (and/or trailer) and rear axle group, and that it can also prevent vehicle instability and from locking of rear axle wheels by limiting brake force on the rear axles. This invention proposes a redundant electro-pneumatic brake control system for providing braking capability in case of failure of a main brake control system, which enables independent control of service brakes and spring brakes with one regulator. The proposed redundant electro-pneumatic brake control system uses an electro-pneumatic parking brake, EPB, as regulator for redundant brake control. The EPB is a component that is today available in most vehicles. The EPB's main task is to regulate spring brakes (typically at a rear axle of the vehicle) by generating a pressure at the spring brakes during driving, which prevents the spring brakes from being actuated. When the vehicle is parked, the pressure can be released such that the spring brakes lock the rear axle.

The proposed technique is based on the fact that a step response of the pneumatic connection from pressure demand at the EPB to actuation of the spring brakes, typically is significantly longer than the step response of the pneumatic connection to the service brakes due to that there is a considerable air volume in the spring brake chambers. This have led to the insight that it may be possible to independently control also service brakes (for example at the front axle) using the EPB as a regulator, as long as the step response between the EPB and the service brakes is significantly shorter than the step response between the EPB and the spring brakes. This may often be the case as service brakes may be controlled by a control pressure present in a thin pipe as will be explained further below.

Therefore, it is herein proposed that the EPB is used as a regulator for both spring brakes and service brakes during redundant braking. More specifically, a pressure control valve, PCV, is added to enable controlling the service brakes during short pulses and to hold the control pressure (in the thin pipe downstream the PCV) the rest of the time. The control pressure affecting the service brakes can then be adjusted by opening the PCV during short pulsations of demanded service brake pressure from the EPB. Between these short pulses, the EPB pressure can be used to control the spring brake pressure. Hence, the pulsations have to be long enough to control the service brakes, but short enough not to significantly affect the spring brakes. In this way, for example rear axle brake force generated by spring brakes can be limited when necessary to avoid instability without affecting the front axle brake force generated by service brakes.

The proposed technique may be implemented by reusing several components that are typically used by a primary service brake system of a vehicle. For example, in some embodiments a Trailer Control Module, TCM, and Pressure Control Modulators, PCM, are used to control the service brakes.

The TCM is a component that takes EPB pressure as input and provides a control pressure suitable to control trailer service brakes. The control pressure provided by the TCM output is typically inverted and rescaled with regards to the EPB pressure in order to be suitable to control the trailer service brakes. Therefore, this control pressure is also suitable to activate other service brakes. By adding a connection from the TCM to the front axle group PCM(s) the control pressure that is normally used to brake the trailer can also be used to brake front axle service brakes.

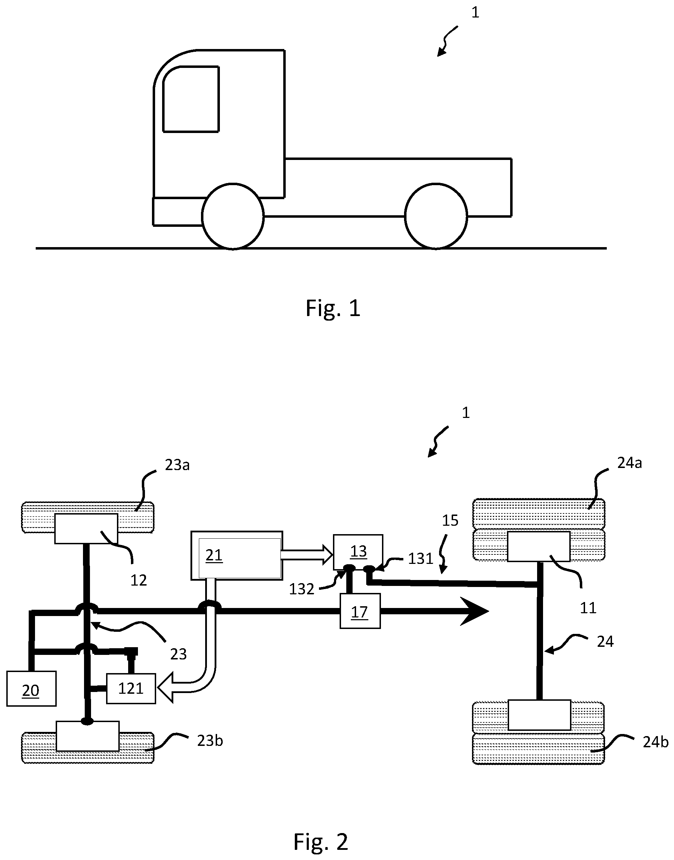

Fig. 1 illustrates a vehicle 1, here a truck, where the proposed technique may be implemented. The vehicle 1 may comprise a means for transportation in broad sense and is for example a bus, a truck, or other similar manned or unmanned vehicle.

The proposed technique relates to a redundant electro-pneumatic brake control system that can be electrically activated. The proposed electro-pneumatic brake control system can be implemented by reusing components that are used by the main brake control system and also components used by a pneumatic brake system actuatable by a driver by pushing a brake pedal. Therefore, for better understanding of the proposed technique, a manually driven vehicle will first be described with reference to Fig. 2. Fig. 2 is a conceptual drawing of the vehicle 1 (seen from above). More specifically, Fig. 2 illustrates parts of the vehicle 1 that are also used by the proposed redundant electro-pneumatic brake system.

The vehicle 1 comprises a first pair of wheels (i.e. front wheels 23a, 23b) arranged on a front wheel axle 23 and a second pair of wheels (i.e. rear wheels 24a, 24b) arranged on a rear wheel axle 24. The vehicle 1 further comprises spring brakes 11, service brakes 12 and an air supply system 21.

The air supply system 21 is arranged to supply pressurized air for use by the vehicle's brake control systems. Compressed air is produced by a compressor, which is normally driven by the engine (not shown) of the vehicle 1.

The one or more spring brakes 11, commonly referred to as simply "the parking brake" or "the emergency brake", are pressure actuated. In other words, a spring brake 11 is actuated by a variation in pressure, typically a pressure in a pressure chamber. More specifically, a spring brake 11 comprises a resilient means which is controlled by a pressure level in a pressure chamber. The spring brakes 11 are actuated when air pressure in the brake chamber falls (air is evacuated) and are released when air pressure builds up in the chamber. Thus, during driving there has to be a pressure in the pressure chamber in order to prevent the spring brakes from braking the rear wheels 24a, 24b.

Traditionally, the parking brake has been actuated by the driver manually releasing the pressure by pulling a stick lever. In modern vehicles an Electro-pneumatic Parking Brake, EPB, has been introduced. The EPB 13 is a component configured to generate a controllable EPB pressure. More specifically, the EPB 13 is configured to receive an electrical signal, herein referred to as pressure demand, and to generate an EPB pressure based on the pressure demand. In other words, the level of the EPB pressure may be controlled by a control signal provided by the control arrangement 10. For example, the EPB pressure is stepwise controlled, by providing different control data, herein called pressure demand, to the EPB. Hence, in the vehicle 1 of Fig. 2, the EPB pressure is used to control the pressure level in the brake chambers of the spring brakes 11, such that the spring brakes 11 may be actuated and released.

The EPB 13 uses air supplied by the air supply system 21 to generate the EPB pressure. The EPB pressure is supplied on a first EPB port 131 and on a second EPB port 132. In these example embodiments, the supplied pressure at the a first EPB port 131 is controlled to the same level as the pressure at a second EPB port 132. However, the pressure may anyhow be different at the first and second EPB ports. It is basically the same pressure in the entire volumes regulated by the respective EPB ports 131 or 132, but that does not mean that it is the same pressure in the volume downstream the first EPB port 131 as in the volume downstream the second EPB port 132. In other words, the volumes downstream the ports are sufficiently independent or disconnected from each other albeit they are regulated against the same pressure (i.e. the EPB pressure). Thus, any flow evening out the pressure between the volumes is in general significantly smaller than the flow in / out of the EPB ports during transient conditions such as a change in pressure demand. Hence, as the air flow through the EPB ports is limited, a step response time may differ between the EPB ports as a larger volume downstream an EPB ports takes longer to fill/empty to reach demanded pressure.

It must be appreciated that other EPB implementations are also possible. For example, the EPB may be capable to regulate the pressure on the EPB ports against different levels, but still not completely independent. For example, there may be a dependency between the pressure levels at the EPB ports, such as a pressure offset.

A pneumatic connection, herein referred to as first pneumatic connection 15, is arranged to connect the EPB to the spring brakes 11. A pneumatic connection is a pneumatic circuit configured to enable pneumatic control by conveying a pressure variation to a pneumatically controlled component. A pneumatic connection may comprise one or more pneumatic links (e.g. pipes, tubes, or fittings) connected by pneumatic fittings. A pneumatic connection may additionally comprise additional pneumatic components, such as valves. In the illustrated example, the first pneumatic connection 15 conveys the EPB pressure supplied at the first EPB port 131 to the pressure chambers of the spring brakes 12, such that the spring brakes 11 are actuatable by the EPB pressure. The spring brakes are typically actuated at atmosphere pressure. Hence, while driving the vehicle 1, the EPB pressure is controlled to a level above atmosphere pressure, to prevent the spring brakes from braking the vehicle. The second EPB port is used to brake the trailer, as will be further explained below.

To actuate or release the spring brakes 11, the pressure in the pressure chamber needs to be changed. The volume of the pressure chamber is significantly larger than, for example, the volume of the pneumatic connections used to actuate the service brakes. This means that when the EPB pressure is changed, based on a pressure demand given to the EPB 13, it will take some time for the pressure at EPB port 131 and in the pressure chamber to reach the demanded level. Hence, it takes some time before the spring brakes reacts. The reaction time can be expressed as a step response of the first pneumatic connection 15. The step response is for example defined as the time it takes to reach e.g. 95% of demanded pressure at the EPB port 131 or 132.

The service brakes 12 may be of any conceivable type controlled by supply of compressed air. The service brakes 12 are for example disc brakes or drum brakes. In contrast to the spring brakes 11, the service brakes 12 are typically applied when pressure in a pressure chamber increases. One or more Pressure Controlled Modules, PCM, 121 are arranged to supply a controllable pressure to the service brakes 23. For example, one PCM 121 is arranged at the front axle 23 and one PCM (not shown) is arranged at the rear axle 24. In other words, the service brakes 12 are actuatable by a Pneumatic Control Module, PCM, 121. The pressure is generated using the air supply system 21. The PCM can be either electrically or pneumatically controlled. The PCM is basically a relay valve that opens the air flow from the air supply system 21 based on (e.g. proportionally to) the control pressure at the PCM port 122. Note that in this simplified example, service brakes 12 are illustrated at the front wheel axle. However, the vehicle 1 typically comprises service brakes arranged on both front axles 23 and rear axles 24. In addition, other types of brakes are often available and are used for braking during operation of the vehicle, commonly referred to as auxiliary brakes. Examples of auxiliary brakes are engine brake and exhaust brakes.

During normal operation, braking of the vehicle 1 is controlled by a main (or primary) braking system. In modern vehicles the main braking system is commonly implemented using brake-by-wire, i.e. brake control through electrical means. Braking of the vehicle 1 is then for example obtained by sending electrical signals to the PCM 121 instructing the PCM 121 to supply pressure to the service brakes 12 using the compressed air supplied by the air supply system 21. The main brake control system can also control the EPB to actuate the spring brakes 11.

The vehicle 1 also comprises a pneumatic brake control system actuated by a Foot Brake Module, FBM, 20. The pneumatic brake control is activated when the main brake control system fails (for any reason). The pneumatic brake control system uses a control pressure generated by a Foot Brake Module, FBM, 20 to actuate service brakes 12. If the main brake control system operates normally, it will close valves in the PCM to block the control pressure generated by the FBM 20, such that the control pressure generated by the FBM 20 does not control the service brakes. In other words, the PCM selects either the "electrically controlled" pressure or the "pneumatically controlled" pressure from the FBM. In normal operation it selects the electrically controlled pressure. However, if the main brake control fails, then the pneumatic brake control system will immediately take over brake control, without any action being taken. In other words, the control of brakes will automatically be taken over. The main braking system is typically fail-silent. Hence, it is capable of self-diagnosis and may shut down by itself in case an error is detected. Also, if the electrical system (which controls the primary braking system) becomes powerless, the redundant system, which is pneumatic, will take over.

The pneumatic brake control system operates as follows. When the brake pedal is pressed down, a valve in the FBM is opened whereby a control pressure is generated using the air supply system 21. The control pressure generated by the FBM is supplied to the PCM 121 and to a Trailer Control Module, TCM, 17. The PCM 121 is thereby controlled to supply a pressure to activate the service brakes 12, typically on both on front and rear axles 23, 24. In this way, the brake force applied by the service brakes 23 is pneumatically controlled by the control pressure supplied by the FBM.

If a trailer is connected to the vehicle 1, trailer service brakes are also controllable by the main braking system or by the pneumatic brake control system. The TCM 17 is a component that takes a pressure as input and generates a control pressure suitable to control the trailer service brakes, based on the pressure. The TCM may for example be controlled by the control pressure generated by the FBM or by the EPB pressure generated by the EPB 13.

Hence, the second EPB port 132 is pneumatically connected to an input port of the TCM 17. As a decreased EPB pressure is required to apply the spring brakes 11, the control pressure provided by the TCM output port is typically inverted and rescaled with regards to the EPB pressure in order to be suitable to control the trailer brakes. In this way, the trailer brakes can also be activated when the driver pushes the brake pedal.

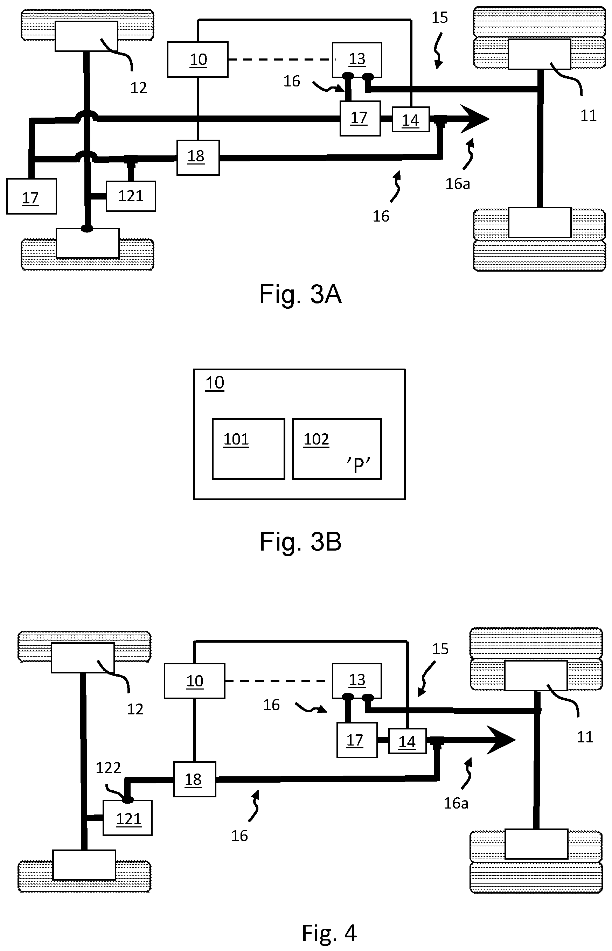

The proposed technique will now be described with reference to Fig. 3. The vehicle 1 of Fig. 3 comprises partly the same components as the vehicle of Fig. 2. In addition, components are added, which enables electrical brake control, based on electronic control signals, upon failure of a main braking system of the vehicle 1. Hence, the redundant brake control may be controlled by an electrical signal generated by an autonomous driving control function instead of by a pneumatic control pressure generated when a driver pushes the brake pedal. The electrical brake control is typically controlled by redundant electricity source, such as a separate battery. Hence, the proposed redundant electro-pneumatic brake control system, herein referred to as the electro-pneumatic brake control system, can be used when no driver is present. For simplicity, the pressure supply system 21 is not shown in Fig. 3.

The proposed electro-pneumatic brake control system uses some components which are also used by the manually driven vehicle Fig. 2. More specifically, the electro-pneumatic brake control system comprises an EPB 13 configured to generate a controllable EPB pressure. The system also comprises a first pneumatic connection 15 arranged to connect the EPB to the spring brakes 11, such that the spring brakes 11 are actuatable by the EPB pressure. These components have already been described in connection to Fig. 2.

In addition, the electro-pneumatic brake control system comprises a second pneumatic connection 16, a pressure control valve, PCV, 14 and a control arrangement 10.

The second pneumatic connection 16 is a pneumatic connection arranged to connect the second EPB port 132 of the EPB 13 to a control port 122 of the PCM 121. Thereby, the generated EPB pressure regulates a control pressure present at the control port 122. Hence, the second pneumatic connection 16 makes it possible to control of the service brakes 12 using the EPB pressure. The second pneumatic connection 16 may comprise one or more pneumatic components. Thus, it may be a pneumatic circuit. In the illustrated example, the second pneumatic connection 16 is a pneumatic circuit comprising several pneumatic components. More specifically, the second pneumatic connection 16 comprises, the TCM 17, the PCV 14, a valve 18 and pneumatic links connecting these components. However, in any case, a step response of the second pneumatic connection 16 is shorter than a step response of the first pneumatic connection 15. In the illustrated example, there are two physical ports at the EPB 13. However, in some embodiments the EPB only has one port and the first and second pneumatic connection may then have a shared part. In any case, the first and second pneumatic connections 15, 16 are arranged in a way such that there is a difference in step response from EPB pressure demand to control pressure between the two connections.

Thus, the pressure control valve, PCV, 14 is arranged in the second pneumatic connection 16. The PCV 14 is a valve that is controllable to be set in an open position and in a closed position. In the open position fluid can flow freely through the PCV 14, such that the pressure upstream the PCV is the same as the pressure downstream the PCV 14. When the PCV 14 is in the closed position, the fluid flow through the PCV 14 is blocked. As the connection downstream the PCV 14 is substantially closed, a control pressure at the control port 122 of the PCM 121 can be held, or at least only insignificantly changed (e.g. by leakage). Stated differently, a control pressure at the control port 122 of the PCM 121 is maintained when the PCV 14 is in the closed position. That the pressure is maintained here means that the pressure remains almost constant. In reality, there might of course be a small leakage, which does however not affect the service brakes 12. However, in the case leakage would reduce the pressure a certain amount, the pressure can be refilled by opening of the PCV. The PCV 14 contributes to enabling independent control of the spring brakes 11 and the service brakes 12, as will be further described below. In the illustrated example, the PCV 14 is arranged downstream the TCM 17, but the same functionality could be achieved by placing the PCV 14 upstream the TCM 17.

As the service brakes 12 are typically actuated by a pressure increase of the control pressure at the control port 122 of the PCM 121 and the spring brakes 11 are actuated by a pressure decrease, the EPB pressure needs to be inverted to be suitable to control the service brakes 12. The inversion is basically an inversion of the pressure variation, which means that an increase of the EPB pressure is converted to a pressure decrease. In other words, in some embodiments, the redundant pneumatic brake control system comprises a pressure inversion device 17 (for example an inversion valve) arranged in the second pneumatic connection 16 to invert the EPB pressure and to provide the inverted EPB pressure at the control port of the PCM.

In the illustrated example the pressure inversion device is implemented by a TCM 17, which is a component normally used to control the trailer brakes, as described above. The TCM 17 inverts a pressure variation of the EPB pressure, which makes the pressure generated by the TCM 17 suitable for also controlling the service brakes 12. By adding a connection from the TCM 17 to the front axle group PCM(s), the pressure that is normally used to brake the trailer is also used to brake the front axle service brakes 12 by opening the a valve 18, arranged between the TCM 17 and the PCM 12. The valve 18 is for example a 3/2 valve having three pipe connections and two orifices. When one orifice is open, the other is closed, and vice versa. Hence, the valve 18 is controllable to connect the control port 122 of the PCM 121 to either the output of the TCM or to atmosphere pressure. The valve 18 is used to activate the redundant braking of service brakes in the front. It is closed when the redundant brake control system is not in use, so that the normal braking function performed by the main braking system is not affected by the redundant brake control system. The valve 18 is needed in this example implementation, because otherwise the main braking system would respond to EPB pressure at the PCM, which is not expected. However, it is possible to have other solutions as well. All in all, with this implementation no additional inversion valve needs to be added which would be required if the TCM 17 is not used.

As in the example above, the vehicle 1 may be connected to a trailer. Thus, in some embodiments, one part 16a of the second pneumatic connection 16 is arranged to connect the generated EPB pressure to a trailer input port of a trailer, such that brakes of the trailer are controllable by the EPB pressure. Hence, the EPB 13 may also be used to brake the trailer during redundant braking.

It must be appreciated that, in this invention an implementation using spring brakes at the rear axles and service brakes at the front axle have been used to illustrates the proposed technique. However, it must be appreciated that the technique can of course be used to control spring brakes and service brakes arranged on any axle/s Now turning to Fig. 3B which illustrates the control arrangement 10 configured to implement the proposed method in more detail. In some embodiments, the control arrangement 10 is a "unit" in a functional sense. Hence, in some embodiments the control arrangement 10 is a control arrangement comprising several physical control devices that operate in corporation.

The control arrangement 10 comprises one or more ECUs. An ECU is basically a digital computer that controls one or more electrical systems (or electrical sub systems) of the vehicle 1 based on e.g. information read from sensors and meters placed at various parts and in different components of the vehicle 1. ECU is a generic term that is used in automotive electronics for any embedded system that controls one or more functions of the electrical system or sub systems in a transport demand vehicle. The control arrangement 10 comprises for example a Brake Control Module, BCM or an Automated-Driving Control Unit, ADAS or any other suitable ECU.

The control arrangement 10 comprises hardware and software. The hardware basically comprises various electronic components on Printed Circuit Board, PCB. The most important of those components is typically one or more processors 101 e.g. a microprocessor, along with memory 102 e.g. EPROM or a Flash memory chip. For simplicity only one processor 101 and memory 102 is illustrated in the control arrangement 10, but in a real implementation it could of course be more.

The control arrangement 10, or more specifically a processor 101 of the control arrangement 10, is configured to cause the control arrangement 10 to perform all aspects of the method described above and below. This is typically done by running computer program code 'P' stored in the memory 102 in the processor 101 of the control arrangement 10.

More, specifically the control arrangement 10 is configured to perform independent control of the pressure-actuated spring brakes 11 and service brakes 12 by alternately controlling the PCV 14 to the open position and the closed position, while controlling a level of the EPB pressure. Independent or individual control herein refers to that it is possible to perform individual control of service brake and spring brake to a certain extent. As will be appreciated by the examples below, this does not mean that the control is fully independent, as the spring brakes will be affected by the service brake control. In other words, independent brake control herein refers to that the brake control is approximately independent, which means that it is independent enough to at some extent individually control the service brakes and the spring brakes. Hence, independent does not require that the other brakes are totally unaffected when the other brakes are controlled. In any case, the control is independent enough to be able to distribute brake force between the wheel axles to avoid instability. The control is based on the difference in step response of the first and second pneumatic connections 15,16. For example, the control may be performed as follows, when the control pressure controlling the service brakes is changed.

In a starting position the PCV 14 is closed and EPB is controlled based on spring brake demand. Spring brake demand herein refers to a spring brake request, which corresponds to a brake force needed for example at the rear axle, whereas service brake demand herein refers to a service brake request, which corresponds to for example a brake force needed at the front axle and or trailer. As the PCV is closed, the pressure at the control port 122 of the PCM 121 is held (i.e. kept constant) and independent of the EPB pressure. The control signal to the EPB is then changed based on service brake demand and the PCV 14 is controlled to open to equalize pressure between input and output of the PCV 14. Thereby, the control pressure present at the control port 122 of the PCM 121, which controls "service brakes" through PCM, is updated.

Once the demanded pressure at the control port 122 of the PCM 121 has been reached, the PCV 14 is controlled to close and spring brake demand is again requested from the EPB 13. Service brake demand will be retained downstream the PCV 14. As a result, the control pressure downstream the PCV 14 has changed based on the service brake demand and EPB can again be controlled based on spring brake demand.

In some embodiments the redundant brake control procedure has two main states. The two states may be selectively set using the control arrangement 10. In one state the control arrangement 10 is configured to control the PCV to be set in the open position while controlling the level of the EPB pressure based on a service brake demand. Then the service brakes 12 are controlled based on the service brake demand. In another state the control arrangement 10 is configured to control the PCV 14 to be set in the closed position while controlling the level of the EPB pressure based on a spring brake demand. Consequently, the spring brakes 11 are controlled based on the spring brake demand and the control pressure at the control port 122 of the PCM 121 is maintained at the same level as before closing the PCV 14. When the PCV 14 is open the impact of the EPB pressure at the spring brakes 11 is limited by the inertness of the first pneumatic connection 15. It should be appreciated that further states may be used if suitable for a given application.

The time when the EPB 13 is regulated based on service brake demand has to be short enough, not to influence the spring brakes 11 too much. Typically, the EPB 13 is only controlled based on service brake demand during short pulses. In other words, the control arrangement 10 is configured to control a level of the EPB pressure based on a service brake pressure demand during time periods that are shorter than a maximum pulse length. The rest of the time the EPB can be controlled based on spring brake demand.

The pulse length shall be long enough to allow the pressure at the control port 122 of the PCM 121 to reach service brake demand, but not longer than necessary, since at the same time the pressure affects the pressure to spring brakes (albeit much slower). In other words, the pulse length shall be equal to or longer than the step response of the second pneumatic connection 16. For example, if the time to reach 95% of the service brake demand is 100ms, a suitable time may be 150ms.

It is typically a requirement that this time (i.e. the pulse length) is significantly shorter than a step response of the first pneumatic connection 15, otherwise the spring brakes may be affected by the service brake demand. In other words, in some embodiments, the maximum pulse length is shorter than the step response of the first pneumatic connection 15. Hence, it is expected that the pulse length should be significantly shorter than the step response of the first pneumatic connection 15, such that the spring brakes are insignificantly affected. For example, the pulse length is shorter than 10% or 50% of the step response of the first pneumatic connection 15. However, it all depends on the response times of the pneumatic connection. For example, if the step response of the first pneumatic connection 15 is 100 ms and the step response of the second pneumatic connection 16 is 1000 ms, then a suitable on-time might be 150 ms. On the other hand, if the step response of the first pneumatic connection 15 is 200 ms and the step response of the second pneumatic connection 16 is 3000 ms, then a suitable on-time might be 200-600 ms.

The control arrangement 10 is also configured to control the valve 18 to open when the redundant braking control system is active and to close it when it is not active, as explained above.

Fig. 4 illustrates another example implementation of the proposed technique. In the example of Fig. 4, the vehicle does not comprise an FBM 20 and associated pneumatic connections. This might be the case in a fully autonomous vehicle, that can only be autonomously driven.

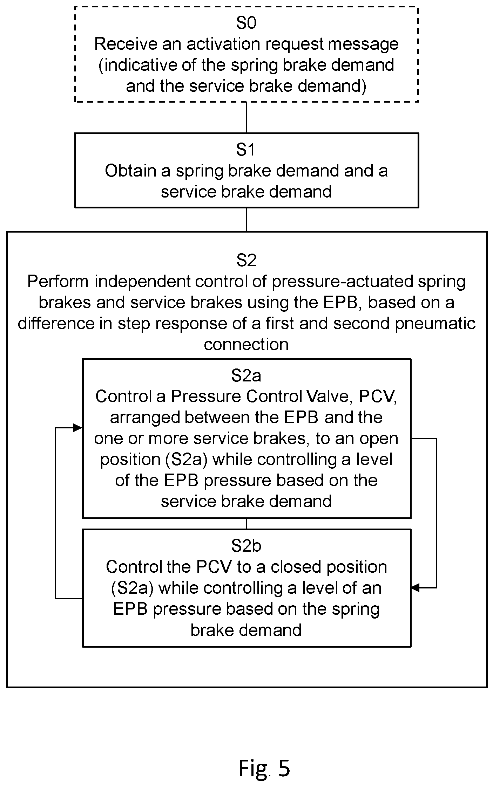

Fig. 5 illustrates a flow chart of a method for redundant braking control of a vehicle 1. The method is for use in a control arrangement, such as the control arrangement 10 of the vehicle 1 of Fig. 3A or 4. The method is for use in a control arrangement, such as the control arrangement 10 of the vehicle 1.

The method is typically performed when a main braking system is not operational. This may e.g. be indicated by the main braking system itself or by another subsystem of the vehicle 1. In other words, in some embodiments, the method comprises receiving S0 an activation request message indicating that the main brake control system is dysfunctional.

The control unit also need to know how much brake force is required on the front and rear axles 23, 24 and on the trailer. In some embodiments the activation request comprises information indicative of the spring brake demand and the service brake demand. Alternatively, the spring brake demand and the service brake demand is determined by the control arrangement 10, based on available data such as sensor data and driving data. In other words, the method comprises obtaining S1 a spring brake demand and a service brake demand.

The method further comprises performing S2 independent control of the spring brakes and the service brakes using the EPB and based on the difference in step response of pneumatic connections by alternately or selectively letting the EPB pressure control the spring brakes and the service brakes. The spring brakes 11 are controlled by the EPB pressure by controlling S2b the PCV to a closed position while controlling a level of an EPB pressure based on the spring brake demand. The service brakes 12 are controlled by the EPB pressure by controlling S2a the PCV 14 arranged between the EPB and the one or more service brakes, to an open position, while controlling a level of the EPB pressure based on the service brake demand. In some embodiments, other states may be set in between these control states.

In some embodiments, the level of the EPB pressure is controlled S2b based on a service brake pressure demand during time periods that are shorter than a maximum pulse length. The pulse length is set based on the step responses of the first and second pneumatic connections as explains in connection to Fig. 3A above. In some embodiments, the pulse length is at least equal to the step response of the second pneumatic connection 16. In some plausible embodiments, the maximum pulse length is shorter than the step response of the first pneumatic connection 15. In some embodiments, EPB pressure is controlled S2a based on a spring brake pressure demand the rest of the time.

Fig. 5 is a graph illustrating how the pressures in the redundant electro-pneumatic brake control system changes based on input.

The upper graph illustrates spring brake control over time. More specifically, the solid line illustrates pressure demand to EPB, and the dashed line illustrates the corresponding pressure at the first EPB port 131.

The middle graph illustrates the corresponding service brake control over time. More specifically, the dash-dotted line illustrates the pressure downstream the PCV 14 and the dotted line illustrates the pressure upstream the PCV.

The lower graph illustrates the PCV control. More specifically, the solid line illustrates a control signal to the PCV, which may be set to two control levels representing "Holding pressure" or "Passing through pressure".

At 41, the EPB pressure demand is set to a low pressure level and the PCV is open. This will cause the pressure in the spring brake chambers to slowly decrease to the EPB pressure, while the pressure downstream the PCV 14 increases rapidly to an inverse of the EPB pressure.

At 42 the EPB pressure demand changed (increased) to avoid that the spring brakes are locking the rear axle. At the same time, the PCV 14 is controlled to hold pressure to maintain the control pressure to the service brakes 12 and trailer brakes at the same level. As a consequence, the pressure at the first EPB port 13, which is controlling the spring brakes, slowly raises to the desired level.

At 43 a different control pressure to service brakes is requested. Thus, EPB demand is changed in a short pulse based on the service brake demand, while opening the PCV 14 to adjust pressure downstream PCV 14. Note that during the pulse, the pressure at the first EPB port decreases slightly. However, the effect of this decrease is insignificant due to the slow step response of the first pneumatic connection 15.

The terminology used in the description of the embodiments as illustrated in the accompanying drawings is not intended to be limiting of the described method; control arrangement or computer program. Various changes, substitutions and/or alterations may be made, without departing from invention embodiments as defined by the appended claims.

The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims.

## Claims

1. A redundant pneumatic brake control system for use in a vehicle (1) comprising service brakes (12) actuatable by a Pneumatic Control Module, PCM, (121) and pressure-actuated spring brakes (11), wherein the service brakes (12) are configured to be electrically actuated by a main braking system during normal operation of the vehicle (1) and wherein the redundant pneumatic brake control system is arranged to be activated upon failure of a main braking system of the vehicle (1), the redundant pneumatic brake control system comprising:
- an Electropneumatic Parking Brake module, EPB, (13) configured to generate a controllable EPB pressure,
- a first pneumatic connection (15) arranged to connect the EPB to the spring brakes (11), such that the spring brakes (11) are actuatable by the EPB pressure,
- a second pneumatic connection (16) arranged to connect the EPB to a control port (122) of the PCM (121) , such that the generated EPB pressure regulates a control pressure present at the control port (122), wherein a step response of the second pneumatic connection (16) is shorter than a step response of the first pneumatic connection (15),
**characterized in that** the redundant pneumatic brake control system comprises:
- a pressure control valve, PCV, (14) arranged in the second pneumatic connection (16), wherein the PCV (14) is controllable to an open position and a closed position, wherein a control pressure at the control port (122) of the PCM (121) is maintained when the PCV is in the closed position and
- an electronic control arrangement (10) configured to perform independent control of the pressure-actuated spring brakes (11) and service brakes (12) by alternately controlling the PCV (14) to the open position and the closed position, based on the difference in step response of the first and second pneumatic connections (15,16), while controlling a level of the EPB pressure.

2. The redundant pneumatic brake control system according to claim 1, wherein the electronic control arrangement (10) is configured to:
- controlling a level of the EPB pressure based on a service brake pressure demand during time periods that are shorter than a maximum pulse length.

3. The redundant pneumatic brake control system according to claim 1 or 2, wherein a pulse length is at least as long as the step response of the second pneumatic connection (16).

4. The redundant pneumatic brake control system according to claim 2 or 3, wherein a/the pulse length is shorter than the step response of the first pneumatic connection (15).

5. The redundant pneumatic brake control system according to any of the preceding claims, wherein the electronic control arrangement (10) configured to:
- control the PCV to the open position while controlling the level of the EPB pressure based on a service brake demand, whereby the service brakes are controlled based on the service brake demand and
- control the PCV (14) to the closed position while controlling the level of the EPB pressure based on a spring brake demand, whereby spring brakes are controlled based on the spring brake demand and control pressure at the control port (122) of the PCM (121) is maintained.

6. The redundant pneumatic brake control system according to any of the preceding claims, wherein the second pneumatic connection (16) is arranged to connect the generated EPB pressure to a trailer input port of a trailer, such that brakes of the trailer are controllable by the EPB pressure.

7. The redundant pneumatic brake control system according to any of the preceding claims, wherein the service brakes are actuated by a pressure increase of the control pressure at the control port (122) of the PCM (121) , wherein the spring brakes are actuated by a pressure decrease and wherein redundant pneumatic brake control system comprises:
- a pressure inversion device (17) arranged in the second pneumatic connection to invert the EPB pressure and to provide the inverted EPB pressure at the control port of the PCM.

8. The redundant pneumatic brake control system according to claims 6 and 7, wherein the redundant pneumatic brake control system comprises a Trailer Control Module, TCM, arranged in the second pneumatic connection to control the input pressure at the trailer input port and wherein the pressure inversion device is arranged in the TCM.

9. A vehicle (1) comprising:
- service brakes (12) actuatable by a Pneumatic Control Module, PCM, (121)
- pressure-actuated spring brakes (11), wherein the service brakes (12) are configured to be electrically actuated by a main braking system during normal operation of the vehicle (1) and
- the redundant pneumatic brake control system according to any one of claims 1-8.

10. A method for operating a redundant braking control of a vehicle (1), wherein the vehicle (1) comprises spring brakes actuatable by an Electropneumatic Parking Brake, EPB, pressure generated by an EPB and service brakes actuatable by the EPB pressure, and wherein a pneumatic connection between the EPB and the spring brakes has a longer step response than a pneumatic connection connecting the EPB and the service brakes, the method comprising:
- obtaining (S1) a spring brake demand and a service brake demand, and
- performing (S2) independent control of the spring brakes and the service brakes using the EPB and based on the difference in step response of pneumatic connections by alternately:
• controlling, (S2a) a Pressure Control Valve, PCV, arranged between the EPB and the one or more service brakes, to an open position (S2a) while controlling a level of the EPB pressure based on the service brake demand, such that the EPB pressure controls the spring brakes, and
• controlling (S2b) the PCV to a closed position (S2a) while controlling a level of an EPB pressure based on the spring brake demand, such that the EPB pressure actuates the spring brakes and a control pressure controlling the service brakes is maintained

11. The method according to claim 10, comprising:
- receiving (S0) an activation request message indicative of the spring brake demand and the service brake demand.

12. The method according to claim 10 or 11, controlling a level of the EPB pressure based on a service brake pressure demand during time periods that are shorter than a maximum pulse length.

13. The method according to any of claims 10 to 12, wherein the/a maximum pulse length is shorter than the step response of the first pneumatic connection (15).

14. A computer program comprising instructions which, when the computer program is executed by a computer, cause the computer to carry out the method according to any one of the preceding claims 10 to 13.

15. A computer-readable medium comprising instructions which, when executed by a computer, cause the computer to carry out the method according to any one of the preceding claims 10 to 13.

## Patentansprüche

1. Redundante pneumatische Bremssteuerung zur Verwendung in einem Fahrzeug (1), die Betriebsbremsen (12), die durch ein pneumatisches Steuermodul, PCM, (121) betätigbar sind, und druckbetätigte Federbremsen (11) umfasst, wobei die Betriebsbremsen (12) dazu eingerichtet sind, während des normalen Betriebs des Fahrzeugs (1) von einem Hauptbremssystem elektrisch betätigt zu werden, und wobei die redundante pneumatische Bremssteuerung derart ausgebildet ist, dass sie bei einem Ausfall eines Hauptbremssystems des Fahrzeugs (1) aktiviert wird, wobei die redundante pneumatische Bremssteuerung umfasst:
- ein elektropneumatisches Parkbremsmodul, EPB, (13), das zum Erzeugen eines steuerbaren EPB-Drucks eingerichtet ist,
- eine erste pneumatische Verbindung (15), die dazu ausgebildet ist, die EPB mit den Federbremsen (11) derart zu verbinden, dass die Federbremsen (11) durch den EPB-Druck betätigbar sind,
- eine zweite pneumatische Verbindung (16), die dazu ausgebildet ist, die EPB mit einem Steueranschluss (122) des PCM (121) derart zu verbinden, dass der erzeugte EPB-Druck einen an dem Steueranschluss (122) vorhandenen Steuerdruck regelt, wobei eine Sprungantwort der zweiten pneumatischen Verbindung (16) kürzer ist als eine Sprungantwort der ersten pneumatischen Verbindung (15),
**dadurch gekennzeichnet, dass** die redundante pneumatische Bremssteuerung umfasst:
- ein Drucksteuerventil, PCV, (14), das in der zweiten pneumatischen Verbindung (16) angeordnet ist, wobei das PCV (14) in eine geöffnete Stellung und eine geschlossene Stellung steuerbar ist, wobei ein Steuerdruck an dem Steueranschluss (122) des PCM (121) aufrechterhalten wird, wenn sich das PCV in der geschlossenen Stellung befindet, und
- eine elektronische Steueranordnung (10), die dazu eingerichtet ist, eine unabhängige Steuerung der druckbetätigten Federbremsen (11) und der Betriebsbremsen (12) durchzuführen, indem sie das PCV (14) basierend auf dem Unterschied in der Sprungantwort der ersten und zweiten pneumatischen Verbindung (15, 16) abwechselnd in die geöffnete Stellung und die geschlossene Stellung steuert, während sie ein Niveau des EPB-Drucks steuert.

2. Redundante pneumatische Bremssteuerung nach Anspruch 1, wobei die elektronische Steueranordnung (10) eingerichtet ist zum:
- Steuern eines Niveaus des EPB-Drucks basierend auf einer Betriebsbremsdruckanforderung in Zeiträumen, die kürzer sind als eine maximale Impulslänge.

3. Redundante pneumatische Bremssteuerung nach Anspruch 1 oder 2, wobei eine Impulslänge wenigstens so lange ist wie die Sprungantwort der zweiten pneumatischen Verbindung (16).

4. Redundante pneumatische Bremssteuerung nach Anspruch 2 oder 3, wobei eine/die Impulslänge kürzer ist als die Sprungantwort der ersten pneumatischen Verbindung (15).

5. Redundante pneumatische Bremssteuerung nach einem der vorangehenden Ansprüche, wobei die elektronische Steueranordnung (10) eingerichtet ist zum:
- Steuern des PCV in die geöffnete Stellung, während das Niveau des EPB-Drucks basierend auf einer Betriebsbremsanforderung gesteuert wird, wodurch die Betriebsbremsen basierend auf der Betriebsbremsanforderung gesteuert werden, und
- Steuern des PCV (14) in die geschlossene Stellung, während das Niveau des EPB-Drucks basierend auf einer Federbremsanforderung gesteuert wird, wodurch die Federbremsen basierend auf der Federbremsanforderung gesteuert werden und der Steuerdruck an dem Steueranschluss (122) des PCM (121) aufrechterhalten wird.

6. Redundante pneumatische Bremssteuerung nach einem der vorangehenden Ansprüche, wobei die zweite pneumatische Verbindung (16) dazu ausgebildet ist, den erzeugten EPB-Druck mit einem Anhängereingangsanschluss eines Anhängers derart zu verbinden, dass die Bremsen des Anhängers durch den EPB-Druck steuerbar sind.

7. Redundante pneumatische Bremssteuerung nach einem der vorangehenden Ansprüche, wobei die Betriebsbremsen durch einen Druckanstieg des Steuerdrucks an dem Steueranschluss (122) des PCM (121) betätigt werden, wobei die Federbremsen durch einen Druckabfall betätigt werden und wobei die redundante pneumatische Bremssteuerung umfasst:
- eine Druckinversionsvorrichtung (17), die in der zweiten pneumatischen Verbindung angeordnet ist, um den EPB-Druck zu invertieren und den invertierten EPB-Druck an dem Steueranschluss des PCM bereitzustellen.

8. Redundante pneumatische Bremssteuerung nach Anspruch 6 und 7, wobei die redundante pneumatische Bremssteuerung ein Anhängersteuermodul, TCM, umfasst, das in der zweiten pneumatischen Verbindung angeordnet ist, um den Eingangsdruck an dem Anhängereingangsanschluss zu steuern, und wobei die Druckinversionsvorrichtung in dem TCM angeordnet ist.

9. Fahrzeug (1), das umfasst:
- durch ein pneumatisches Steuermodul PCM, (121) betätigbare Betriebsbremsen (12)
- druckbetätigte Federbremsen (11), wobei die Betriebsbremsen (12) dazu eingerichtet sind, während des normalen Betriebs des Fahrzeugs (1) von einem Hauptbremssystem elektrisch betätigt zu werden, und
- die redundante pneumatische Bremssteuerung nach einem der Ansprüche 1-8.

10. Verfahren zum Betreiben einer redundanten pneumatischen Bremssteuerung eines Fahrzeugs (1), wobei das Fahrzeug (1) Federbremsen, die durch einen von einer elektropneumatischen Feststellbremse, EPB, erzeugten EPB-Druck betätigbar sind, und Betriebsbremsen, die durch den EPB-Druck betätigbar sind, umfasst und wobei eine pneumatische Verbindung zwischen der EPB und den Federbremsen eine längere Sprungantwort aufweist als eine pneumatische Verbindung, die die EPB und die Betriebsbremsen verbindet, wobei das Verfahren umfasst:
- Erhalten (S1) einer Federbremsanforderung und einer Betriebsbremsanforderung und
- Durchführen (S2) eines unabhängigen Steuerns der Federbremsen und der Betriebsbremsen unter Verwendung der EPB und basierend auf dem Unterschied in der Sprungantwort der pneumatischen Verbindungen durch abwechselndes:
• Steuern (S2a) eines Drucksteuerventils, PCV, das zwischen der EPB und der einen oder den mehreren Betriebsbremsen angeordnet ist, in eine geöffnete Stellung (S2a), während ein Niveau des EPB-Drucks basierend auf der Betriebsbremsanforderung derart gesteuert wird, dass der EPB-Druck die Federbremsen steuert, und
• Steuern (S2b) des PCV in eine geschlossene Stellung (S2a), während ein Niveau eines EPB-Drucks basierend auf der Federbremsanforderung derart gesteuert wird, dass der EPB-Druck die Federbremsen betätigt und ein Steuerdruck, der die Betriebsbremsen steuert, aufrechterhalten wird.

11. Verfahren nach Anspruch 10, das umfasst:
- Empfangen (S0) einer Aktivierungsanforderungsnachricht, die die Federbremsanforderung und die Betriebsbremsanforderung angibt.

12. Verfahren nach Anspruch 10 oder 11, das Steuern eines Niveaus des EPB-Drucks basierend auf einer Betriebsbremsdruckanforderung in Zeiträumen umfasst, die kürzer sind als eine maximale Impulslänge.

13. Verfahren nach einem der Ansprüche 10 bis 12, wobei die/eine maximale Impulslänge kürzer ist als die Sprungantwort der ersten pneumatischen Verbindung (15).

14. Computerprogramm mit Befehlen, die, wenn das Computerprogramm von einem Computer ausgeführt wird, den Computer dazu veranlassen, das Verfahren nach einem der vorangehenden Ansprüche 10 bis 13 auszuführen.

15. Computerlesbares Medium mit Befehlen, die, wenn sie von einem Computer ausgeführt werden, den Computer dazu veranlassen, das Verfahren nach einem der vorangehenden Ansprüche 10 bis 13 auszuführen.

## Revendications

1. Système de commande redondante de freins pneumatiques destiné à être utilisé dans un véhicule (1) comprenant des freins de service (12) pouvant être actionnés par un boîtier de commande pneumatique, PCM, (121) et des freins à ressort actionnés par pression (11), dans lequel les freins de service (12) sont configurés pour être actionnés électriquement par un système de freinage principal pendant le fonctionnement normal du véhicule (1) et dans lequel le système de commande redondante de freins pneumatiques est agencé pour être activé lors d'une défaillance d'un système de freinage principal du véhicule (1), le système de commande redondante de freins pneumatiques comprenant :
- un boîtier de frein de stationnement électropneumatique, EPB, (13) configuré pour générer une pression EPB commandable,
- un premier raccord pneumatique (15) agencé pour raccorder l'EPB aux freins à ressort (11), de telle sorte que les freins à ressort (11) peuvent être actionnés par la pression EPB,
- un deuxième raccord pneumatique (16) agencé pour raccorder l'EPB à un port de commande (122) du PCM (121), de telle sorte que la pression EPB générée régule une pression de commande présente au niveau du port de commande (122), dans lequel une réponse indicielle du deuxième raccord pneumatique (16) est plus courte qu'une réponse indicielle du premier raccord pneumatique (15),
**caractérisé en ce que** le système de commande de frein pneumatique redondant comprend :
- une soupape de commande de pression, PCV, (14) agencée dans le deuxième raccord pneumatique (16), dans lequel la PCV (14) peut être commandée vers une position ouverte et une position fermée, dans lequel une pression de commande au niveau du port de commande (122) du PCM (121) est maintenue lorsque la PCV est dans la position fermée et
- un agencement de commande électronique (10) configuré pour réaliser une commande indépendante des freins à ressort actionnés par pression (11) et des freins de service (12) en commandant en alternance la PCV (14) vers la position ouverte et la position fermée, sur la base de la différence de réponse indicielle des premier et deuxième raccords pneumatiques (15, 16), tout en commandant un niveau de la pression EPB.

2. Système de commande redondante de freinage pneumatique selon la revendication 1, dans lequel l'agencement de commande électronique (10) est configuré pour :
- la commande d'un niveau de la pression EPB sur la base d'une demande de pression de frein de service pendant des périodes qui sont plus courtes qu'une longueur d'impulsion maximale.

3. Système de commande redondante de freins pneumatiques selon la revendication 1 ou 2, dans lequel une longueur d'impulsion est au moins aussi longue que la réponse indicielle du deuxième raccord pneumatique (16).

4. Système de commande redondante de freins pneumatiques selon la revendication 2 ou 3, dans lequel une/la longueur d'impulsion est plus courte que la réponse indicielle du premier raccord pneumatique (15).

5. Système de commande redondante de freinage pneumatique selon l'une quelconque des revendications précédentes, dans lequel l'agencement de commande électronique (10) configuré pour :
- la commande de la PCV vers la position ouverte tout en commandant le niveau de la pression EPB sur la base d'une demande de frein de service, moyennant quoi les freins de service sont commandés sur la base de la demande de frein de service et
- la commande de la PCV (14) vers la position fermée tout en commandant le niveau de la pression EPB sur la base d'une demande de frein à ressort, moyennant quoi les freins à ressort sont commandés sur la base de la demande de frein à ressort et la pression de commande au niveau du port de commande (122) du PCM (121) est maintenue.

6. Système de commande redondante de freins pneumatiques selon l'une quelconque des revendications précédentes, dans lequel le deuxième raccord pneumatique (16) est agencé pour raccorder la pression EPB générée vers un port d'entrée de remorque d'une remorque, de telle sorte que les freins de la remorque peuvent être commandés par la pression EPB.

7. Système de commande redondante de freins pneumatiques selon l'une quelconque des revendications précédentes, dans lequel les freins de service sont actionnés par une augmentation de pression de la pression de commande au niveau du port de commande (122) du PCM (121), dans lequel les freins à ressort sont actionnés par une diminution de pression et dans lequel le système de commande redondante de freins pneumatiques comprend :
- un dispositif d'inversion de pression (17) agencé dans le deuxième raccord pneumatique pour inverser la pression EPB et pour fournir la pression EPB inversée au niveau du port de commande du PCM.

8. Système de commande redondante de freins pneumatiques selon les revendications 6 et 7, dans lequel le système de commande redondante de freins pneumatiques comprend un boîtier de commande de remorque, TCM, agencé dans le deuxième raccord pneumatique pour commander la pression d'entrée au niveau du port d'entrée de remorque et dans lequel le dispositif d'inversion de pression est agencé dans le TCM.

9. Véhicule (1) comprenant :
- des freins de service (12) pouvant être actionnés par un boîtier de commande pneumatique, PCM, (121)
- des freins à ressort actionnés par pression (11), dans lequel les freins de service (12) sont configurés pour être actionnés électriquement par un système de freinage principal pendant le fonctionnement normal du véhicule (1) et
- le système de commande redondante de freinage pneumatique selon l'une quelconque des revendications 1 à 8.

10. Procédé pour mettre en fonctionnement une commande de freinage redondante d'un véhicule (1), dans lequel le véhicule (1) comprend des freins à ressort pouvant être actionnés par une pression de frein de stationnement électropneumatique, EPB, générée par un EPB et des freins de service pouvant être actionnés par la pression EPB, et dans lequel un raccord pneumatique entre l'EPB et les freins à ressort a une réponse indicielle plus longue qu'un raccord pneumatique raccordant l'EPB et les freins de service, le procédé comprenant :
- l'obtention (S1) d'une demande de frein à ressort et d'une demande de frein de service, et
- la réalisation (S2) d'une commande indépendante des freins à ressort et des freins de service à l'aide de l'EPB et basée sur la différence de réponse indicielle des raccords pneumatiques par, en alternance :
• la commande (S2a) d'une soupape de commande de pression, PCV, agencée entre l'EPB et les un ou plusieurs freins de service, vers une position ouverte (S2a) tout en commandant un niveau de la pression EPB sur la base de la demande de frein de service, de telle sorte que la pression EPB commande les freins à ressort, et
• la commande (S2b) de la PCV vers une position fermée (S2a) tout en commandant un niveau d'une pression EPB sur la base de la demande de frein à ressort, de telle sorte que la pression EPB actionne les freins à ressort et qu'une pression de commande commandant les freins de service est maintenue

11. Procédé selon la revendication 10, comprenant :
- la réception (S0) d'un message de demande d'activation indiquant la demande de frein à ressort et la demande de frein de service.

12. Procédé selon la revendication 10 ou 11, commandant un niveau de la pression EPB sur la base d'une demande de pression de frein de service pendant des périodes qui sont plus courtes qu'une longueur d'impulsion maximale.

13. Procédé selon l'une quelconque des revendications 10 à 12, dans lequel la/une longueur d'impulsion maximale est plus courte que la réponse indicielle du premier raccord pneumatique (15).

14. Programme d'ordinateur comprenant des instructions qui, lorsque le programme d'ordinateur est exécuté par un ordinateur, amènent l'ordinateur à effectuer le procédé selon l'une quelconque des revendications 10 à 13.

15. Support lisible par ordinateur comprenant des instructions qui, lorsqu'elles sont exécutées par un ordinateur, amènent l'ordinateur à effectuer le procédé selon l'une quelconque des revendications précédentes 10 à 13.
